# EUROPÄISCHE PATENTANMELDUNG

(11) **EP 0 747 452 A2**
(43) Veröffentlichungstag der Anmeldung: **11.12.1996**
(21) Anmeldenummer: 96108808.5
(22) Anmeldetag: 01.06.1996
(51) Int. Cl.: C09C 1/42

(54) **Verfahren zum Erzeugen eines Meta-Kaolin-Weisspigments aus Kaolinit**

(30) Priorität: 09.06.1995 DE 19520411
(71) Anmelder: METALLGESELLSCHAFT AG, 60323 Frankfurt am Main (DE)
(72) Erfinder: Bareuther, Ernst, 35510 Butzbach (DE); Kauper, Jochen, 63477 Maintal (DE); Stockhausen, Werner, 61118 Bad Vilbel (DE); Rahn, Martin, 60433 Frankfurt am Main (DE)

(57) **Zusammenfassung**

Einem Wirbelschichtreaktor gibt man Brennstoff, sauerstoffhaltiges Gas und kristallwasserhaltigen Kaolinit auf, wobei mindestens 80 Gew.-% des Kaolinits Korngrößen im Bereich von 0,1 bis 3 mm aufweisen. Im Wirbelschichtreaktor befindet sich eine Wirbelschicht mit Temperaturen im Bereich von 850 bis 950°C und man zieht aus dem Wirbelschichtreaktor Meta-Kaolin-Weißpigment mit einem Kristallwassergehalt von höchstens 2 Gew.-% ab.

## Beschreibung

Die Erfindung betrifft ein Verfahren zum Erzeugen eines Meta-Kaolin-Weißpigments durch thermisches Behandeln von kristallwasserhaltigem Kaolinit. Hierbei wird von der bekannten Tatsache Gebrauch gemacht, daß Kaolinit (Al₂O₃.2SiO₂.2H₂O) bei der Erhitzung auf etwa 450°C Wasser abspaltet. Das entwässerte Kaolin (Al₂O₃.2SiO₂) wird Meta-Kaolin genannt. Bei weiterem Erhitzen des Meta-Kaolins auf 900°C beginnt in einer exothermen Reaktion die Bildung des sogenannten Mullits (3Al₂O₃.2SiO₂), der gegenüber dem Meta-Kaolin erheblich härter ist.

Der Erfindung liegt die Aufgabe zugrunde, ein Meta-Kaolin-Weißpigment auf kostengünstige Weise herzustellen, das für verschiedene Anwendungsfälle gut geeignet ist. Der Hauptbestandteil des Pigments ist Meta-Kaolin, wobei der Mullit-Anteil gering oder vernachlässigbar ist. Erfindungsgemäß wird dies dadurch erreicht, daß man einem Wirbelschichtreaktor Brennstoff, sauerstoffhaltiges Gas und körnigen Kaolinit zuführt, wobei mindestens 80 Gew.-% des Kaolinits Korngrößen im Bereich von 0,1 bis 3 mm aufweisen, daß man im Wirbelschichtreaktor eine Wirbelschicht mit Temperaturen im Bereich von 850 bis 950°C aufrecht erhält und daß man aus dem Wirbelschichtreaktor das Meta-Kaolin-Weißpigment mit einem Kristallwassergehalt von höchstens 2 Gew.-% abzieht. Dieses Pigment ist z.B. geeignet als Zuschlag bei der Glasfaser- oder Papierherstellung sowie bei der Herstellung von Lacken, Farben und anderen Pigmenten.

Man geht von einem ausreichend gereinigten Kaolinit aus, wie er z.B. auch für die Porzellanherstellung brauchbar ist. Als Brennstoff, der im Wirbelschichtreaktor verbrannt wird, eignen sich feste, flüssige oder gasförmige Brennstoffe, z.B. aschearme oder aschefreie feinkörnige Kohle, leichtes Heizöl, Erdgas oder Methanol.

Üblicherweise liegt gereinigter Kaolinit in sehr feinkörniger Form mit Korngrößen im Bereich von 0,01 bis 50 µm vor. Dieses feinkörnige Material hat ungenügende Wirbeleigenschaften und es ist schwer möglich, hierbei im Reaktor einen stabilen Wirbelzustand aufrechtzuerhalten. Es empfiehlt sich deshalb, diesen feinkörnigen Kaolinit zu granulieren und ein Granulat zu erzeugen, bei welchem mindestens 80 Gew.-% Korngrößen im Bereich von 0,1 bis 3 mm aufweisen. Mit diesem Granulat kann die gewünschte Wirbelschicht im Reaktor gebildet werden, welche die thermische Reaktion und eine gute Fluidisierung ermöglicht.

Beim erfindungsgemäßen Verfahren erfolgt die thermische Behandlung in der Wirbelschicht. Dabei kann eine stationäre Wirbelschicht mit einem Wirbelbett mit definierter Oberfläche gebildet werden. Eine weitere Möglichkeit besteht darin, daß man mit einer zirkulierenden Wirbelschicht arbeitet. In beiden Fällen, sowohl beim Arbeiten mit der stationären Wirbelschicht als auch mit der zirkulierenden Wirbelschicht ist es vorteilhaft, daß man die Temperatur in der Wirbelschicht mit einer Schwankung von höchstens ± 15°C konstant hält. Diese Temperaturkonstanz ist nur beim Arbeiten in der Wirbelschicht möglich, wenn man gleichzeitig einen großen Feststoffdurchsatz wünscht. Durch die Temperaturkonstanz wird in vorteilhafter Weise ein sehr einheitliches Produkt erzeugt. Insbesondere ist es auf diese Weise möglich, den Mullit-Anteil bei der Herstellung von weißem Pigment so niedrig zu halten, daß er nicht mehr stört.

Die Verweilzeiten der Feststoffe im Wirbelschichtreaktor liegen üblicherweise im Bereich von 0,1 bis 2 Stunden und zumeist bei 0,5 bis 1 Stunde. Bei diesen relativ kurzen Reaktionszeiten kann das Verfahren ersichtlich mit hoher Produktivität betrieben werden. Den restlichen Kristallwassergehalt des aus dem Wirbelschichtreaktor abgezogenen Produkts kann man z.B. über den Gewichtsverlust beim anschließenden Glühen des Produkts ermitteln.

Ausgestaltungsmöglichkeiten des Verfahrens werden mit Hilfe der Zeichnung erläutert. Es zeigt:
- Fig. 1: das Fließschema einer ersten Verfahrensvariante und
- Fig. 2: das Fließschema einer zweiten Verfahrensvariante.

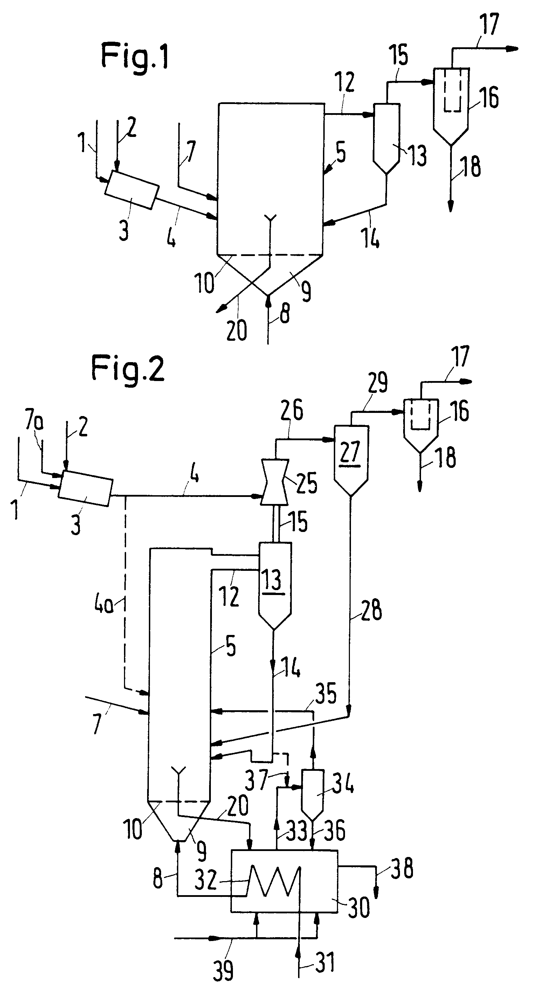

Gemäß Fig. 1 wird feinkörniger Kaolinit durch die Leitung (1) zusammen mit Wasser, das in der Leitung (2) herangeführt wird, einer Granulationseinrichtung (3) zugeführt. Zum Granulieren kann man handelsübliche Geräte verwenden, die z.B. nach dem Prinzip der Drehrohrtrommel oder des Drehtellers arbeiten. Man erzeugt ein Granulat mit Korngrößen im Bereich von 0,1 bis 3 mm und vorzugsweise bis 2 mm. Bei einer solchen Granulation spricht man üblicherweise auch von einer Mikrogranulation. Durch die Leitung (4) gibt man das Granulat dem Wirbelschichtreaktor (5) auf. Falls das Granulat aus der Granulationseinrichtung (3) einen zu hohen Wassergehalt aufweist, kann es in nicht dargestellter Weise getrocknet werden, z.B. durch Zumischen von trockenem Kaolinit oder von Meta-Kaolin-Filterstaub.

Dem Wirbelschichtreaktor (5) führt man durch die Leitung (7) Brennstoff zu, um durch Verbrennung im Reaktor (5) die Temperatur auf dem gewünschten Niveau von 850 bis 950°C zu halten. Prinzipiell kommen hierfür feste, flüssige oder gasförmige Brennstoffe in Frage. Für das Herstellen weißer Pigmente ist es wichtig darauf zu achten, daß der Brennstoff möglichst aschefrei verbrennt, um das Produkt nicht zu verfärben.

Beim Verfahren gemäß Fig. 1 wird im Reaktor (5) eine stationäre Wirbelschicht aufgebaut. Sauerstoffhaltiges Gas, insbesondere Luft oder auch mit Sauerstoff angereicherte Luft, wird durch die Leitung (8) herangeführt und gelangt über die Anströmkammer (9) und den Düsenrost (10) in das darüber befindliche Wirbelbett. Die Regulierung der Temperatur im Wirbelbett erfolgt einerseits durch Regeln der Menge des zugeführten sauerstoffhaltigen Gases und andererseits durch die Brennstoffzufuhr. Da man üblicherweise im Abgas des Reaktors einen O₂-Restgehalt von etwa 2 bis 6 Vol.-% einstellt, resultiert daraus eine relativ geringe Menge an Abgas, was die Weiterbehandlung des Abgases erleichert.

Verbrennungsabgas, das staubhaltig ist, verläßt den Reaktor (5) durch die Leitung (12) und wird zunächst im Zyklon (13) grob entstaubt. Abgeschiedene Feststoffe werden durch die Leitung (14) in den Reaktor (5) zurückgeführt. Das Abgas gelangt dann durch die Leitung (15) in eine Filtereinrichtung (16), die z.B. mit Schlauchfiltern ausgerüstet ist. Entstaubtes Abgas strömt in der Leitung (17) ab und der Filterstaub wird in der Leitung (18) abgeführt. Dieser Filterstaub kann in nicht dargestellter Weise in den Reaktor (5) zurückgeführt werden, insbesondere dadurch, daß man ihn dem Granulator (3) zuführt.

Nach einer Behandlungszeit von üblicherweise 0,1 bis 2 Stunden und zumeist 0,5 bis 1 Stunde zieht man fertiges Produkt aus dem Reaktor (5) durch die Leitung (20) ab. Dieses Produkt wird in an sich bekannter, nicht dargestellter Weise gekühlt, wobei man Abwärme zum Vorwärmen des sauerstoffhaltigen Gases der Leitung (8) verwenden kann.

Bei der Verfahrensvariante gemäß Fig. 2 gibt man der Granulationseinrichtung (3) neben dem durch die Leitung (1) herangeführten feinkörnigen Kaolinit durch die Leitung (7a) flüssigen oder festen Brennstoff auf. Wasser wird in der Leitung (2) herangeführt. Man erhält auf diese Weise brennstoffhaltiges Kaolinit-Granulat mit üblicherweise 10 bis 30 Gew.-% Wasser, das man in der Leitung (4) abführt. Um dieses Granulat zu trocknen, bringt man es in der Venturi-Mischkammer (25) in direkten Kontakt mit heißem Abgas aus dem Zyklon (13). Einen Teil des wasserhaltigen Kaolinit-Granulats kann man durch die gestrichelt eingezeichnete Leitung (4a) direkt dem Wirbelschichtreaktor (5) zuführen. Zusätzlicher Brennstoff kann dem Reaktor durch die Leitung (7) zur Temperaturregelung eingespeist werden.

Der Reaktor (5) gemäß Fig. 2 arbeitet nach dem Prinzip der zirkulierenden Wirbelschicht. Vorgewärmtes, sauerstoffhaltiges Gas, insbesondere Luft, wird durch die Leitung (8) herangeführt und liefert den für die Verbrennung im Reaktor (5) nötigen Sauerstoff. Heißes Verbrennungsgas wird zusammen mit Feststoffen ständig aus dem Reaktor (5) durch die Leitung (12) ausgetragen und zunächst durch den Zyklon (13) geführt. Abgeschiedene Feststoffe gelangen durch die Leitung (14) zurück in den Reaktor (5). Heißes, teilweise entstaubtes Abgas verläßt den Zyklon (13) durch die Leitung (15) und strömt zunächst durch die bereits erwähnte Mischkammer (25). Die Mischkammer (25) besteht im wesentlichen aus einem annähernd zylindrischen Rohr, welches im Innern eine Querschnittsverengung aufweist, um einen Venturieffekt zu erreichen. Durch die so erzeugte Wirbelbildung wird das Granulat aus der Leitung (4) mitgerissen und dabei getrocknet. Granulat und Abgas gelangen dann durch die Leitung (26) zu einem zweiten Abscheidezyklon (27), von dem aus die Feststoffe durch die Leitung (28) dem Reaktor (5) aufgegeben werden. Staubhaltiges Abgas strömt durch die Leitung (29) zur Filtereinrichtung (16), entstaubtes Abgas zieht in der Leitung (17) ab. Der im Filter (16) anfallende Staub, der in der Leitung (18) abgezogen wird, kann in nicht dargestellter Weise zum Granulator (3) oder direkt in den Reaktor (5) geführt werden.

Das gewünschte Pigment zieht man aus dem Reaktor (5) durch die Leitung (20) ab und gibt es zunächst einem Wirbelbettkühler (30) auf. Zum Kühlen der Feststoffe leitet man primäres sauerstoffhaltiges Gas durch die Leitung (31) und eine Rohrschlange (32) durch den Kühler (30) und führt das angewärmte Gas durch die Leitung (8) in den Reaktor (5). Sekundäres sauerstoffhaltiges Gas wird in der Leitung (39) herangeführt, als Fluidisierungsgas durch den Kühler (30) geleitet, in der Leitung (33) abgezogen, durch einen Entstaubungszyklon (34) geführt und schließlich durch die Leitung (35) angewärmt in den Reaktor (5) eingespeist. Die im Zyklon (34) abgeschiedenen Feststoffe gibt man durch die Leitung (36) zurück in den Kühler (30). Falls gewünscht, kann man aus der Leitung (14) einen Teil der Feststoffe durch die gestrichelt eingezeichnete Leitung (37) abziehen und sie über den Zyklon (34) und die Leitung (36) ebenfalls zurück in den Wirbelbettkühler (30) geben. Fertiges, gekühltes Produkt zieht man in der Leitung (38) ab.

### Beispiele

In den folgenden Beispielen wird der thermischen Behandlung Kaolinit-Granulat mit Korngrößen im Bereich von 0,1 bis 2 mm unterworfen, das frei von Brennstoff ist und auf einen Wassergehalt von 15 Gew.-% vorgetrocknet wurde. Gemäß Beispiel 1 arbeitet man in einer der Fig. 1 entsprechenden Laborapparatur mit einem Wirbelschichtreaktor von 1,5 m Höhe und einem Innendurchmesser von 80 mm. Das stationäre Wirbelbett hat eine Höhe von 0,3 m.

Das Beispiel 2 basiert auf einer Verfahrensanordnung gemäß Fig. 2, jedoch ohne den Wirbelbettkühler (30) und ohne die Mischkammer (25). Weitere Daten ergeben sich aus der folgenden Tabelle:

| | Beispiel 1 | Beispiel 2 |
|---|---|---|
| Kaolinit-Granulat zum Reaktor (5) | 1 kg/h | 15 kg/h |
| Primärluft durch Leitung | 5 Nm³/h | 25 Nm³/h |
| (8): Menge und Temperatur | 360°C | 500°C |
| Temperatur über dem Rost (10) | 920°C | 900°C |
| Temperatur in Leitung (12) | 930°C | 910°C |
| Sekundärluft durch Leitung | - | 7 Nm³/h |
| (35): Menge und Temperatur | - | 500°C |
| Leichtöl durch Leitung (7) | 0,15 kg/h | 1,7 kg/h |

| Produktdaten: | | |
|---|---|---|
| Verweilzeit im Reaktor (5) | 60 min | 40 min |
| Glühverlust | 0,5 Gew.-% | 0,6 Gew.-% |
| Weißegrad | 90 % | 91 % |

Der Reaktor (5) des Beispiels 2 hatte eine Höhe von 6 m und einen Innendurchmesser von 0,2 m; die Druckdifferenz zwischen dem Bereich oberhalb des Rostes (10) und dem obersten Reaktorbereich betrug 26 mbar; die Wirbelgasgeschwindigkeit lag bei 1 m/sec. Im Beispiel 1 arbeitete man mit einer Wirbelgasgeschwindigkeit von 0,3 m/sec. Der Glühverlust des produzierten Weißpigments, der dem Restgehalt an Kristallwasser entspricht, wurde nach dem Glühen auf 1100°C bestimmt und der Weißegrad wurde durch optischen Vergleich gemessen.

## Patentansprüche

1. Verfahren zum Erzeugen eines Meta-Kaolin-Weißpigments durch thermisches Behandeln von kristallwasserhaltigem Kaolinit, dadurch gekennzeichnet, daß man einem Wirbelschichtreaktor Brennstoff, sauerstoffhaltiges Gas und körnigen Kaolinit zuführt, wobei mindestens 80 Gew.-% des Kaolinits Korngrößen im Bereich von 0,1 bis 3 mm aufweisen, daß man im Wirbelschichtreaktor eine Wirbelschicht mit Temperaturen im Bereich von 850 bis 950°C aufrecht erhält und daß man aus dem Wirbelschichtreaktor das Meta-Kaolin-Weißpigment mit einem Kristallwassergehalt von höchstens 2 Gew.-% abzieht.

2. Verfahren nach Anspruch 1, dadurch gekennzeichnet, daß man feinkörnigen Kaolinit mit Korngrößen im Bereich von 0,01 bis 50 µm granuliert und Kaolinit-Granulat erzeugt, wobei mindestens 80 Gew.-% des Granulats Korngrößen im Bereich von 0,1 bis 3 mm aufweisen, und daß man das Kaolinit-Granulat dem Wirbelschichtreaktor zuführt.

3. Verfahren nach Anspruch 1 oder 2, dadurch gekennzeichnet, daß man die Temperatur in der Wirbelschicht mit einer Schwankung von höchstens ± 15°C konstant hält.

4. Verfahren nach Anspruch 1 oder einem der folgenden, dadurch gekennzeichnet, daß man Kaolinit unter Zugabe von Wasser granuliert und das erzeugte, wasserhaltige Kaolinit-Granulat im direkten Kontakt mit heißem Abgas aus dem Wirbelschichtreaktor mindestens teilweise trocknet, bevor man das Granulat dem Wirbelschichtreaktor zuführt.

5. Verfahren nach Anspruch 1 oder einem der folgenden, dadurch gekennzeichnet, daß die Feststoffe im Wirbelschichtreaktor Verweilzeiten im Bereich von 0,1 bis 2 Stunden aufweisen.
